# EUROPÄISCHE PATENTSCHRIFT

(11) **EP 1 157 669 B1**
(45) Veröffentlichungstag und Bekanntmachung des Hinweises auf die Patenterteilung: **03.08.2005**
(21) Anmeldenummer: 01112435.1
(22) Anmeldetag: 22.05.2001
(51) Int. Cl.: A61C 1/05

(54) **Zahnärztliches Instrument mit Mitteln zur Kühlung der Präparationsstelle**
Dental instrument with means for cooling the treatment location
Instrument dentaire possédant des moyens de refroidissement de la zone d'opération

(30) Priorität: 22.05.2000 DE 10025013
(43) Veröffentlichungstag der Anmeldung: 28.11.2001
(73) Patentinhaber: Sirona Dental Systems GmbH, 64625 Bensheim (DE)
(72) Erfinder: Hain, Josef, 69514 Laudenbach (DE)
(74) Vertreter: Sommer, Peter

(56) Entgegenhaltungen:
- EP-A- 0 023 672
- DE-A- 3 302 584
- GB-A- 853 639
- US-A- 1 596 632

## Beschreibung

Die Erfindung bezieht sich auf ein zahnärztliches Instrument mit Mitteln zur Kühlung der Präparationsstelle, entsprechend dem Oberbegriff des Patentanspruches 1.

Bei der Bearbeitung von Zähnen, sei es mit rotierenden oder oszillierenden Werkzeugen, oder mittels eines Laserwerkzeuges, ist es notwendig, die Präparationsstelle ausreichend zu kühlen, um sie vor einer Schädigung durch Wärme zu bewahren.

Die Kühlung geschieht in der Regel durch Zufuhr von Wasser und Luft, wobei die beiden Medien vor Austritt aus dem Instrument in einer Mischkammer zu einem Spray vermischt werden. Der Spray tritt, auf die Präparationsstelle gerichtet, an einer oder mehreren Düsen im Kopfgehäuse des Instruments aus. Um einen guten Spray zu erzielen, ist es vorteilhaft, wenn der Druck des zugeführten Kühlwassers niedriger ist als der der Kühlluft.

Um den Benutzer die Möglichkeit zu geben, für bestimmte Behandlungen den Wasseranteil des Sprays verändern zu können, sind verschiedene Lösungen mit Ventilen bekannt.

Aus der DE-AS 2 207 240 ist eine Anordnung bekannt, bei der zwischen zwei Instrumententeilen ein rotationssymmetrisch ausgebildetes Ventil geschaltet ist. Das Ventil besteht aus einem Ventilkörper mit einer zylindrischen Mantelfläche auf der die Zu- und Ableitungskanäle für das Medium, dessen Durchfluß verändert werden soll, münden. Exzentrisch zum Ventilkörper ist ein ringförmiger Schließkörper drehbar so gelagert, dass er in Schließstellung mindestens eine der Mündungen verschließt. Ein solches Ventil ist vergleichsweise aufwendig zu erstellen.

Gleiches gilt für ein anderes bekanntes Ventil (DE-OS 1 918 979), welches einen flachen, runden, auf einem planen Ventilsitz aufliegenden Ventilteller enthält, der von außen über ein radial aus dem Griffstück des Instruments vorstehendes Betätigungselement geschaltet wird und der, je nach Drehstellung, einen größeren oder kleineren Öffnungsquerschnitt für das durchfließende Medium freigibt.

Auch hier ist der Fertigungsaufwand, insbesondere wegen der vielen Kleinteile, die mit einer entsprechenden Präzision (geschliffener Ventilteller) gefertigt werden müssen, relativ hoch.

Bekannt ist es außerdem, in den Sprayluftweg einen flexiblen Schlauchabschnitt einzufügen der bei Bedarf durch ein Betätigungselement mehr oder weniger stark gequetscht werden kann. Der Sprayluftanteil kann durch Quetschen des flexiblen Schlauchabschnittes gedrosselt und damit der Spraywasseranteil erhöht werden. Mit einer solchen Schlauchquetschung ist aber keine ausreichend feine Dosierung des Sprayluftanteils möglich.

Das Dokument EP 0 023 672 offenbart ein Zahnänztliches Instrument nach dem Oberbegriff von Anspruch 1.

Der im Patentanspruch 1 angegeben Erfindung liegt die Aufgabe zugrunde, demgegenüber eine Verbesserung zu erzielen und ein zahnärztliches Instrument der eingangs genannten Gattung dahingehend zu verbessern, dass dem Benutzer die Möglichkeit gegeben ist, auf einfache Weise den Spraywasseranteil über einen breiten Druckbereich variieren und damit die Sprayqualität individuell einstellen zu können.

Erfindungsgemäß wird der Spraywasseranteil ausschließlich durch Anpassung der Sprayluft variiert, wobei die vorgeschlagenen Mittel vergleichsweise einfach herzustellen und in das Instrument einzubauen sind. Im einfachsten Fall kann eine Zweipunkt-Verstellung vorgesehen sein, d. h. die Luftmenge kann von einer maximalen auf minimalen Durchflußmenge geschaltet werden. Besonders vorteilhaft ist jedoch eine kontinuierliche, stufenlose Verstellung. Entsprechend einer vorteilhaften Ausgestaltung der Erfindung ist der Schließkörper als Drehklappe und das Stellelement als Stellschraube ausgebildet. Die Stellschraube weist vorteilhafterweise an ihrer Oberseite eine Einstellmarkierung auf, welche mit einer Kennung am Instrument korrespondiert, sodass vom Benutzer eine Einstellung leicht selbst vorgenommen und die Einstellung auch leicht kontrolliert werden kann.

Eine besonders einfache Anordnung läßt sich erzielen, wenn der Schließkörper einstückig ausgebildet und den Kühlluftkanal radial durchdringend angeordnet ist.

Anhand der Zeichnung wird ein Ausführungsbeispiel der Erfindung näher erläutert. Es zeigen:
- Figur 1: ein zahnärztliches Instrument in einer Übersichtdarstellung
- Figur 2: einen Ausschnitt aus einem Teil des Instruments nach Figur 1 mit dem erfindungsgemäßen Umschaltventil
- Figur 3: eine Detaildarstellung der Anordnung mit dem Umschaltventils in einer ersten Schaltstellung
- Figur 4: eine Detaildarstellung der Anordnung mit dem Umschaltventils in einer zweiten Schaltstellung
- Figur 5: eine Draufsicht auf das Umschaltventil

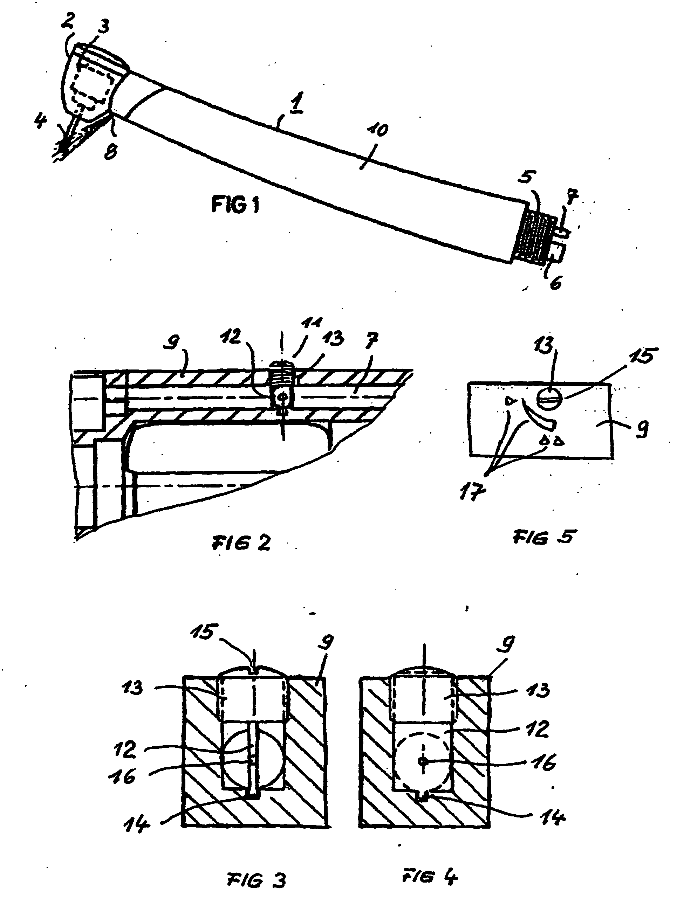

Die Figur 1 zeigt in einer schaubildlichen Darstellung ein zahnärztliches Instrument mit einem Griffkörper 1 an dessen einem Ende sich ein Kopfteil 2 befindet, in dem in bekannter Weise ein mit Druckluft antreibbarer Rotor 3 (Tubine) für den Antrieb eines in Rotation versetzbaren Werkzeuges 4 angeordnet ist. Das andere Ende des Instruments weist eine Armatur 5 für des Anschluß eines nicht dargestellten Versorgungsschlauches auf, über den die Medien Luft und Wasser an das Instrument herangeführt werden. Im Instrument selbst sind entsprechende Leitungen bzw. Kanäle vorgesehen. In der Figur wird auf die Darstellung der Zufuhrleitung für die Antriebsluft verzichtet. Es sind somit nur die beiden Leitungen bzw. Kanäle für die Zufuhr von Luft und Wasser zur Bildung von Spray eingezeichnet. Die mit 6 bezeichnete Leitung soll für die Zufuhr von Spraywasser und die mit 7 bezeichnete Leitung für die Zufuhr von Sprayluft gelten.

Die beiden Medien Sprayluft und Spraywasser werden in einer im Bereich des Kopfteils 2 befindlichen, hier nicht dargestellten Mischkammer zu Spray vermischt, der an der mit 8 bezeichneten Stelle auf die Spitze des Werkzeuges 4 gerichtet austritt.

Die Figur 2 zeigt einen Ausschnitt von dem Instrument in einer Längsschnittdarstellung, wobei davon ausgegangen wird, dass der Griffkörper 1 einen die Leitungen bzw. Kanäle aufnehmenden Grundkörper 9 umfaßt auf den eine äußere Hülse 10 abnehmbar aufgesetzt ist, die in Figur 2 nicht dargestellt ist.

Der Grundkörper 9 enthält ein Umschaltventil 11 mit dem der Anteil der Sprayluft variiert und wegen des höheren Luftdruckes damit auch der Wasseranteil des Sprays an der Austrittsstelle 8 in bestimmten Grenzen erhöht oder reduziert werden kann.

Das Umschaltventil 11 umfaßt einen den Leitungskanal der Leitung 7 radial durchdringenden Schließkörper 12 und ein Stellelement 13 zur Verstellung des Schließkörpers. Der Schließkörper 12 ist als Drehklappe und das Stellelement 13 als Stellschraube ausgebildet. Vorteilhafterweise sind Schließkörper 12 und Stellelement 13 einstückig ausgeführt und in eine radiale Bohrung im Grundkörper 9 eingesetzt. Zur Führung ist das Stellelement 13 mit einem Lagerzapfen 14 versehen, der in eine entsprechende Bohrung im Grundkörper 9 eingreift.

Das Stellelement 13 ist mit einem Schraubschlitz 15 zum Umschalten des Ventils von einer Stellung mit geschlossenem bis zu einer Stellung mit voll geöffnetem Querschnitt versehen, wobei durch die Gestaltung des Schließkörpers ein stufenloses Umschalten erreicht wird. In einer einfachen Version kann eine Zweipunktschaltung von einer minimalen auf maximalen Durchflußmenge vorgesehen werden.

Der Schließkörper 12 ist mit einer kleinen Bohrung 16 versehen die in der geschlossenen Stellung (Figur 4) den Durchtritt einer minimalen Menge an Kühlluft gestattet. In dieser Ventilstellung tritt an der Austrittsstelle 8 'fetter' Spray mit sehr hohem Wasseranteil aus, während in der geöffneten Stellung (Figuren 2 und 3) der Wasseranteil normal ist.

Der Schraubschlitz 15 dient einerseits zum Verstellen des Schließkörpers 12 und andererseits in Verbindung mit außen am Grundkörper befindlichen Markierungen 17 (Figur 5) als Einstellorientierung, mit der die Betriebsstellung des Ventils erkennbar ist. Die Markierungen 17 können individuell gestaltet und verschieden ausgeführt sein. In Figur 5 sind zwei denkbare Beispiele in Form von Symbolen dargestellt, eine Tropfen-und eine Sichelform. Alternativ sind auch Beschriftungen oder Farbkennzeichen denkbar.

### Bezugszeichenliste

- 1 =: Griffkörper
- 2 =: Kopfteil
- 3 =: Antriebsrotor
- 4 =: Werkzeug
- 5 =: Anschlußarmatur
- 6 =: Wasserzufuhrleitung
- 7 =: Luftzufuhrleitung
- 8 =: Sprayaustrittsstelle
- 9 =: Grundkörper
- 10 =: äußere Hülse
- 11 =: Unschaltventil
- 12 =: Schließkörper (Drehklappe)
- 13 =: Stellelement (Stellschraube)
- 14 =: Lagerzapfen
- 15 =: Schraubschlitz
- 16 =: Bohrung
- 17 =: Markierung

## Patentansprüche

1. Zahnärztliches Instrument in welchem zur Kühlung der Präparationsstelle Leitungskanäle (6, 7) zur Zufuhr einerseits von Kühlwasser und andererseits von Kühlluft vorhanden sind, und welches ein von Hand betätigbares Ventil zur Änderung des Durchflusses zumindest der Kühlluft enthält, **dadurch gekenn**- **zeichnet, daß** in den Leitungskanal (7) der Kühlluft ein Umschaltventil (11) mit einem als Drehklappe ausgebildeten Schließkörper (12) eingesetzt ist, mit dem der Durchflußquerschnitt des Kühlluftkanals (7) von einer Stellung mit geschlossenem bis zu einer Stellung mit voll geöffnetem Querschnitt verändert werden kann, wobei der Schließkörper (12) eine Öffnung (16) enthält, die in der geschlossenen Stellung den Durchfluß einer minimalen Menge an Kühlluft gestattet.

2. Zahnärztliches Instrument nach Anspruch 1, **da- durch gekennzeichnet** , daß der Schließkörper (12) so gestaltet ist, dass bei dessen Verstellung der Durchflußquerschnitt kontinuierlich verändert wird.

3. Zahnärztliches Instrument nach Anspruch 1 oder 2, **dadurch gekennzeichnet, daß** der Schließkörper (12) mit einem als Stellschraube ausgebildeten Stellelement (13) verbunden ist das an seiner Oberseite ein Einstellorientierungsmittel (15) aufweist, welches mit Markierungen (17) an Teilen des Instruments (9) korrespondiert.

4. Zahnärztliches Instrument nach Anspruch 3, **da- durch gekennzeichnet**, daß als Einstellorientierungsmittel der Schraubschlitz (15) der Stellschraube des Stellelements (13) vorgesehen ist.

5. Zahnärztliches Instrument nach einem der Ansprüche 1 bis 4, **dadurch gekennzeichnet, daß** Schließkörper (12) und Stellelement (13) einstückig ausgebildet sind.

6. Zahnärztliches Instrument nach einem der Ansprüche 1 bis 5, **dadurch gekennzeichnet, daß** das Umschaltventil (11) den Kühlluftkanal (7) radial durchdringend in einem Grundkörper (9) des Instruments angeordnet ist, den eine abnehmbar gehalterte Außenhülse (10) übergreift.

## Claims

1. A dental instrument containing ducts (6, 7) for cooling the preparation site, one of which ducts feeds cooling water whilst the other feeds cooling air, and having a manually actuated valve for changing the flow rate of at least the cooling air, **characterized in that** in the duct (7) for the cooling air a switch valve (11) is used which comprises a shut-off element (12) in the form of a hinged valve, by means of which shut-off element the cross-sectional area of flow of said cooling air duct (7) can be regulated from a position for zero cross-section to a position for full cross-section, said shut-off element (12) having an orifice (16) that allows for a minimum flow rate of cooling air when said shut-off element is in its closed position.

2. A dental instrument as defined in claim 1, **characterized in that** said shut-off element (12) is designed such that adjustment thereof allows for continuous regulation of the cross-sectional area of flow.

3. A dental instrument as defined in claim 1 or claim 2, **characterized in that** said shut-off element (12) is connected to a setting element (13) in the form of an adjusting screw, which setting element has on its upper surface adjustment orienting means (15) which correspond with markings (17) on parts of said instrument (9).

4. A dental instrument as defined in claim 3, **characterized in that** the adjustment orienting means provided consist of the screw slot (15) of the adjusting screw of said setting element (13).

5. A dental instrument as defined in any one of claims 1 to 4, **characterized in that** said shut-off element (12) and said setting element (13) are in the form of a unitary element.

6. A dental instrument as defined in any one of claims 1 to 5, **characterized in that** said switch valve (11) is disposed in a main body part (9) of the instrument and projects radially into said cooling air duct (7), a removable external sleeve (10) being mounted around said main body part.

## Revendications

1. Instrument dentaire dans lequel, pour le refroidissement de la zone de préparation, des canaux de guidage (6, 7) sont prévus pour l'alimentation d'une part en eau de refroidissement et d'autre part en air de refroidissement, et qui contient une soupape actionnable à la main pour faire varier le débit d'au moins l'air de refroidissement, **caractérisé en ce que** dans le canal de guidage (7) de l'air de refroidissement, est insérée une soupape d'inversion (11) comprenant un corps de fermeture (12) réalisé en tant que volet rotatif, avec lequel la section transversale de débit du canal d'air de refroidissement (7) peut être modifiée d'une position avec une section transversale fermée à une position avec une section transversale ouverte, le corps de fermeture (12) contenant une ouverture (16) qui permet, dans la position fermée, le débit d'une quantité d'air de refroidissement minimale.

2. Instrument dentaire selon la revendication 1, **caractérisé en ce que** le corps de fermeture (12) est configuré de telle sorte que pour son réglage, la section transversale de débit soit modifiée en continu.

3. Instrument dentaire selon la revendication 1 ou 2, **caractérisé en ce que** le corps de fermeture (12) est connecté à un élément de réglage (13) réalisé sous forme de vis de réglage, qui présente sur son côté supérieur un moyen d'orientation d'ajustement (15) qui correspond à des marquages (17) sur des parties de l'instrument (9).

4. Instrument dentaire selon la revendication 3, **caractérisé en ce que** l'on prévoit comme moyen d'orientation d'ajustement la fente filetée (15) de la vis de réglage de l'élément de réglage (13).

5. Instrument dentaire selon l'une quelconque des revendications 1 à 4, **caractérisé en ce que** le corps de fermeture (12) et l'élément de réglage (13) sont réalisés d'une pièce.

6. Instrument dentaire selon l'une quelconque des revendications 1 à 5, **caractérisé en ce que** la soupape d'inversion (11) est disposée radialement à travers le canal d'air de refroidissement (7) dans un corps de base (9) de l'instrument qui vient en prise par le dessus avec une gaine extérieure montée de manière amovible.
